# FASCICULE DE BREVET EUROPEEN

(11) **EP 1 842 270 B1**
(45) Date de publication et mention de la délivrance du brevet: **03.07.2013**
(21) Numéro de dépôt: 06709140.5
(22) Date de dépôt: 20.01.2006
(51) Int. Cl.: H02G 3/08

(54) **BOITIER ELECTRIQUE DOTE D'UN ELEMENT DE PAROI AMOVIBLE**
ELEKTRISCHES GEHÄUSE MIT ABNEHMBAREM WANDELEMENT
ELECTRICAL BOX PROVIDED WITH A REMOVABLE WALL ELEMENT

(30) Priorité: 25.01.2005 FR 0500773
(43) Date de publication de la demande: 10.10.2007
(73) Titulaire: Legrand France, 87000 Limoges (FR); Legrand SNC, 87000 Limoges (FR)
(72) Inventeur: GUILLAUME, Jean-Noël, F-87290 Saint Amand Magnazeix (FR)
(74) Mandataire: Novagraaf Technologies
(86) Numéro de dépôt international: PCT/FR2006/000136
(87) Numéro de publication internationale: WO 2006/079706

(56) Documents cités:
- EP-A- 0 921 546
- US-B1- 6 248 952

## Description

L'invention concerne, de façon générale, les techniques de câblage, notamment dans le domaine de l'électricité.

Plus précisément, l'invention concerne un boîtier électrique comprenant un fond, une paroi latérale, et un couvercle, la paroi latérale présentant des bords inférieur et supérieur, se raccordant au fond, sur toute la périphérie de ce dernier, par son bord inférieur, et s'élevant de son bord inférieur vers son bord supérieur en s'éloignant du fond, le couvercle étant sélectivement appliqué sur le bord supérieur de la paroi pour coiffer le boîtier, la paroi latérale comprenant au moins une fenêtre et au moins un élément de paroi sensiblement plan et amovible, susceptible d'être traversé par au moins un câble électrique, et l'élément de paroi amovible étant, en configuration opérationnelle du boîtier, logé dans la fenêtre, qu'il obture pour assurer la continuité de la paroi latérale.

Un boîtier de ce type, bien connu de l'homme du métier, est par exemple illustré dans le brevet EP 0 657 905 de la Demanderesse, **ainsi que dans le document de brevet plus récent** EP 0 921 546**.**

Les boîtiers dotés d'un ou plusieurs éléments de paroi amovibles, lesquels sont traditionnellement montés coulissants dans les fenêtres correspondantes du boîtier et offrent des traversées de câble éventuellement étanches, sont largement utilisés en raison de leur facilité d'emploi.

Il arrive néanmoins, en particulier dans le cas où le boîtier est ancré sur une surface non plane, que le fond du boîtier subisse des contraintes provoquant une déformation des fenêtres, elle-même susceptible d'entraîner des difficultés de mise en place des éléments de paroi amovibles.

L'invention, qui se situe dans ce contexte, a notamment pour but de proposer un boîtier pratiquement exempt de ce défaut.

A cette fin, le boîtier de l'invention, par ailleurs conforme à la définition générique qu'en donne le préambule ci-dessus, est essentiellement caractérisé en ce que l'élément de paroi amovible présente un premier bord articulé sur un premier bord correspondant de la fenêtre et en ce que l'élément de paroi amovible et la fenêtre présentent, à distance de leurs premiers bords respectifs, des moyens complémentaires de fixation réversible coopérant pour assurer sélectivement le maintien de l'élément de paroi amovible dans la fenêtre.

La fenêtre peut par exemple déboucher sur le bord supérieur de la paroi latérale, et le premier bord de l'élément de paroi amovible peut être sensiblement parallèle au fond, plus proche du fond que du couvercle.

La fenêtre présente avantageusement un rebord interne disposé en retrait vers l'intérieur du boîtier, de sorte que l'élément de paroi amovible peut s'appuyer contre ce rebord en assurant la continuité de la face externe de la paroi latérale.

Les moyens complémentaires de fixation réversible comprennent par exemple au moins un orifice et un téton radialement compressible, sélectivement engagé dans cet orifice.

Dans le mode de réalisation préféré de l'invention, les moyens complémentaires de fixation réversible comprennent deux orifices pratiqués dans le rebord à distance l'un de l'autre et du fond, et deux tétons radialement compressibles correspondants, portés par l'élément de paroi amovible.

Le premier bord de l'élément de paroi amovible est avantageusement articulé sur le premier bord correspondant de la fenêtre au moyen d'une articulation essentiellement composée d'une fente et d'une languette sélectivement engagée dans cette fente.

La fente est par exemple pratiquée dans le fond du boîtier, et la languette fait saillie sur le premier bord de l'élément de paroi amovible.

Pour optimiser la rigidité du boîtier, il peut être utile de prévoir que l'élément de paroi présente, à l'opposé de son premier bord, un second bord bloqué par engagement dans le couvercle.

L'élément de paroi est avantageusement réalisé par une injection bi-matière d'un polymère thermoplastique formant le cadre de cet élément de paroi, et d'un élastomère formant la partie interne de cet élément de paroi.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue partielle éclatée et en perspective d'un boîtier conforme à l'invention, représenté sans son deuxième élément de paroi;
- la figure 2 est une vue partielle et en perspective du boîtier illustré à la figure 1, représenté sans son deuxième élément de paroi et sans son couvercle;

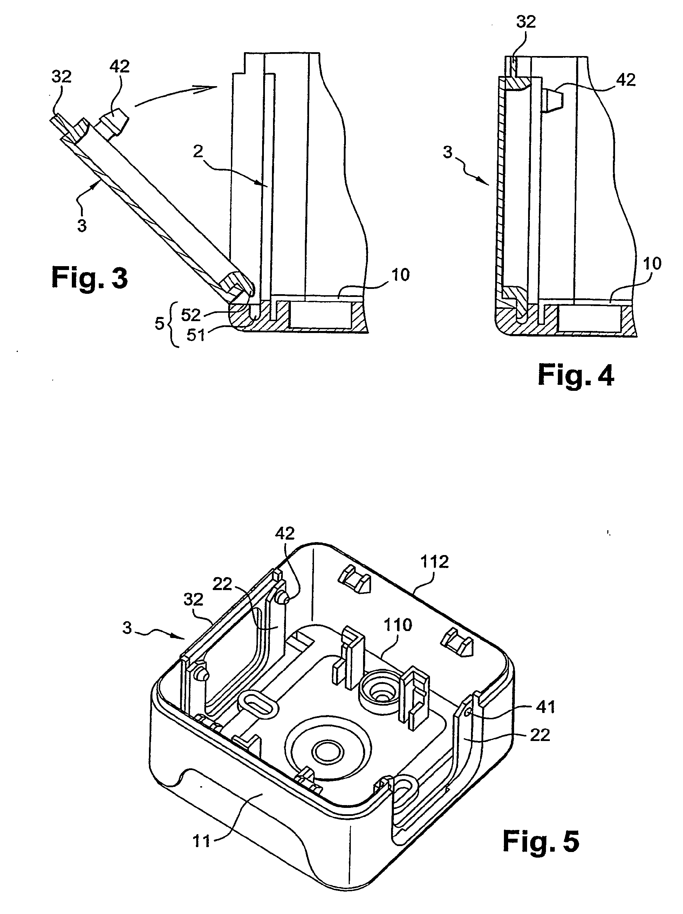

- la figure 3 est une vue en coupe partielle agrandie du boîtier illustré à la figure 1, le premier élément de paroi étant représenté dans la position transitoire de montage illustrée à la figure 2;
- la figure 4 est une vue en coupe partielle agrandie du boîtier illustré à la figure 1, le premier élément de paroi étant représenté dans sa position finale de montage;
- la figure 5 est une vue partielle en perspective du boîtier illustré à la figure 1, représenté sans son deuxième élément de paroi et sans son couvercle, le premier élément de paroi étant représenté dans sa position finale de montage;
- la figure 6 est une vue partielle en perspective du boîtier illustré à la figure 1, représenté après montage et sans son deuxième élément de paroi; et
- la figure 7 est une vue en coupe partielle agrandie du boîtier illustré à la figure 1, représenté dans la configuration qu'illustre la figure 6.

Comme indiqué précédemment, l'invention concerne un boîtier électrique 1 comprenant un fond 10, une paroi latérale 11, et un couvercle 12.

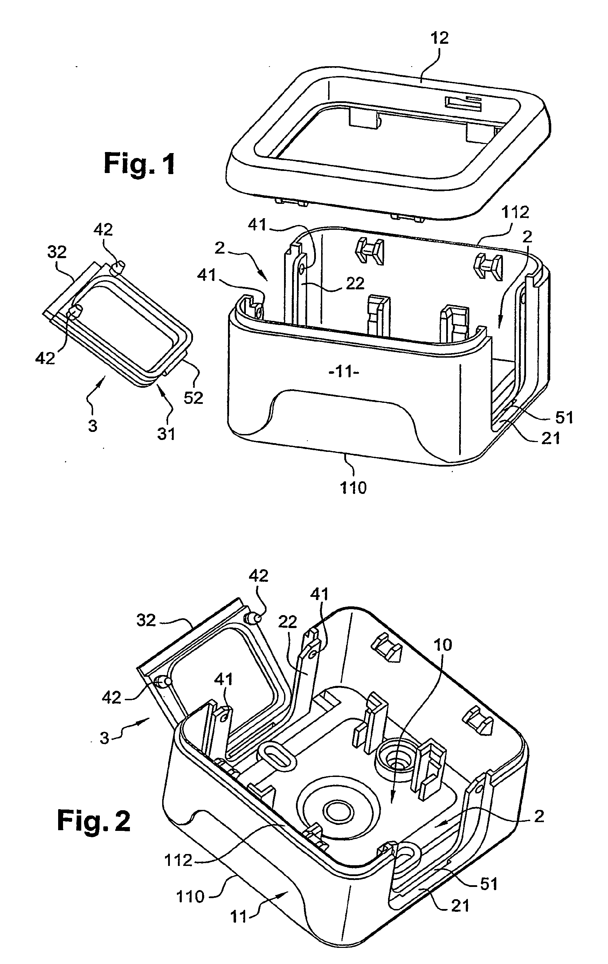

La paroi latérale 11 présente des bords inférieur 110 et supérieur 112 et se raccorde au fond 10 du boîtier, sur toute la périphérie de ce dernier, par son bord inférieur 110 (figure 2).

La paroi latérale 11 s'élève ainsi de son bord inférieur 110 vers son bord supérieur 112 en s'éloignant du fond 10.

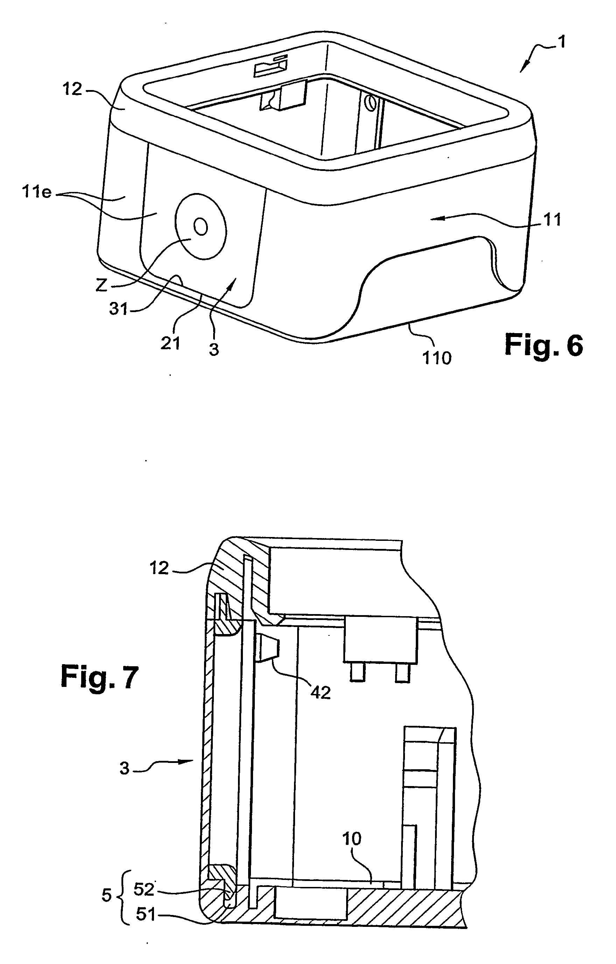

En configuration opérationnelle du boîtier, le couvercle 12 est appliqué (figure 6) sur le bord supérieur 112 de la paroi 11 pour coiffer le boîtier 1.

La paroi latérale 11 comprend une ou plusieurs fenêtres 2 et un ou plusieurs éléments de paroi 3 sensiblement plans et amovibles, le boîtier illustré sur les figures comportant deux fenêtres et deux éléments de paroi dont un seul est représenté.

En configuration opérationnelle du boîtier, chaque élément de paroi amovible 3 est logé dans la fenêtre 2 correspondante, et s'inscrit dans cette fenêtre de manière à l'obturer et à assurer la continuité de la paroi latérale 11.

Par ailleurs, chaque élément de paroi amovible 3 présente par exemple une zone interne souple et / ou déchirable Z (figure 6) de façon à pouvoir être traversé, de préférence de manière étanche, par un ou plusieurs câbles électriques.

L'élément de paroi 3 est par exemple réalisé par une injection bi-matière d'un polymère thermoplastique d'un élastomère, le polymère thermoplastique formant le cadre rigide de cet élément de paroi, et l'élastomère formant sa partie interne souple et éventuellement déchirable.

Selon le mode de réalisation particulier de l'invention qu'illustrent les figures, l'élément de paroi amovible 3 est articulé, par son bord inférieur 31, sur le bord inférieur correspondant 21 de la fenêtre 2, et des moyens complémentaires de fixation réversible 41 et 42 sont prévus sur l'élément de paroi amovible 3 et sur la fenêtre 2, à distance de leurs bords inférieurs respectifs 31 et 21, pour assurer à volonté, par leur coopération, le maintien de l'élément de paroi amovible 3 dans la fenêtre 2.

Bien que l'élément de paroi 3 puisse être articulé différemment dans la fenêtre 2, il est avantageux qu'il soit articulé par son bord inférieur, c'est-à-dire par celui de ses bords qui est sensiblement parallèle au fond 10 et plus proche du fond 10 que du couvercle 12.

L'articulation 5 de l'élément de paroi 3 sur la fenêtre 2 prend par exemple la forme d'une fente 51 pratiquée dans le fond 10 du boîtier, et d'une languette 52 faisant saillie sur le bord inférieur 31 de l'élément de paroi amovible 3 et engagée à volonté dans la fente 51.

Par ailleurs, bien que la fenêtre 2 puisse être découpée à l'intérieur de la paroi latérale 11, elle peut également déboucher sur le bord supérieur 112 de la paroi latérale 11 comme le montrent les figures.

En toute hypothèse, la fenêtre 2 présente avantageusement un rebord interne 22 disposé en retrait vers l'intérieur du boîtier 1, de manière que l'élément de paroi amovible 3 puisse s'appuyer par sa face interne au boîtier contre ce rebord 22 en assurant la continuité de la face externe 11e de la paroi latérale 11 (figure 6).

Les moyens complémentaires de fixation réversible 41 et 42 comprennent par exemple deux orifices 41 pratiqués, de part et d'autre de la fenêtre 2 et à distance du fond 10, dans le rebord 22 de cette fenêtre, et deux tétons 42 radialement compressibles correspondants, portés par l'élément de paroi amovible 3 et simultanément engagés dans les orifices 41 correspondants.

Comme le montre notamment la figure 7, le bord supérieur 32 de l'élément de paroi 3 peut être engagé, dans la configuration opérationnelle du boîtier, dans un logement correspondant du couvercle 12 comme le reste du bord supérieur 112 de la paroi latérale 11, ce qui renforce le maintien qu'assurent les moyens de fixation 41 et 42 de l'élément de paroi 3 dans la fenêtre 2 correspondante.

## Revendications

1. Boîtier électrique (1) comprenant un fond (10), une paroi latérale (11), et un couvercle (12), la paroi latérale (11) présentant des bords inférieur (110) et supérieur (112), se raccordant au fond (10), sur toute la périphérie de ce dernier, par son bord inférieur (110), et s'élevant de son bord inférieur (110) vers son bord supérieur (112) en s'éloignant du fond (10), le couvercle (12) étant sélectivement appliqué sur le bord supérieur (112) de la paroi (11) pour coiffer le boîtier (1), la paroi latérale (11) comprenant au moins une fenêtre (2) et au moins un élément de paroi (3) sensiblement plan et amovible, susceptible d'être traversé par au moins un câble électrique, et l'élément de paroi amovible (3) étant, en configuration opérationnelle du boîtier, logé dans la fenêtre (2), qu'il obture pour assurer la continuité de la paroi latérale (11), **caractérisé en ce que** l'élément de paroi amovible (3) présente un premier bord (31) articulé sur un premier bord correspondant (21) de la fenêtre (2) et **en ce que** l'élément de paroi amovible (3) et la fenêtre (2) présentent, à distance de leurs premiers bords respectifs (31, 21), des moyens complémentaires de fixation réversible (41, 42) coopérant pour assurer sélectivement le maintien de l'élément de paroi amovible (3) dans la fenêtre (2).

2. Boîtier électrique suivant la revendication 1, **caractérisé en ce que** la fenêtre (2) débouche sur le bord supérieur (112) de la paroi latérale (11).

3. Boîtier électrique suivant la revendication 1 ou 2, **caractérisé en ce que** le premier bord (31) de l'élément de paroi amovible (3) est sensiblement parallèle au fond (10) et plus proche du fond (10) que du couvercle (12).

4. Boîtier électrique suivant l'une quelconque des revendications précédentes, **caractérisé en ce que** la fenêtre (2) présente un rebord interne (22) disposé en retrait vers l'intérieur du boîtier (1) et **en ce que** l'élément de paroi amovible (3) s'appuie contre ce rebord (22) en assurant la continuité de la face externe (11e) de la paroi latérale (11).

5. Boîtier électrique suivant l'une quelconque des revendications précédentes, **caractérisé en ce que** les moyens complémentaires de fixation réversible (41, 42) comprennent au moins un orifice (41) et un téton (42) radialement compressible, sélectivement engagé dans cet orifice (41).

6. Boîtier électrique suivant les revendications 3 à 5, **caractérisé en ce que** les moyens complémentaires de fixation réversible (41, 42) comprennent deux orifices (41) pratiqués dans le rebord (22) à distance l'un de l'autre et du fond (10), et deux tétons (42) radialement compressibles correspondants, portés par l'élément de paroi amovible (3).

7. Boîtier électrique suivant l'une quelconque des revendications précédentes, **caractérisé en ce que** le premier bord (31) de l'élément de paroi amovible (3) est articulé sur le premier bord correspondant (21) de la fenêtre (2) au moyen d'une articulation (5) essentiellement composée d'une fente (51) et d'une languette (52) sélectivement engagée dans cette fente (51).

8. Boîtier électrique suivant la revendication 7, **caractérisé en ce que** la fente (51) est pratiquée dans le fond (10) du boîtier, et **en ce que** la languette (52) fait saillie sur le premier bord (31) de l'élément de paroi amovible (3).

9. Boîtier électrique suivant l'une quelconque des revendications précédentes, **caractérisé en ce que** l'élément de paroi (3) présente, à l'opposé de son premier bord (31), un second bord (32) bloqué par engagement dans le couvercle (12).

10. Boîtier électrique suivant l'une quelconque des revendications précédentes, **caractérisé en ce que** l'élément de paroi (3) est réalisé par une injection bi-matière d'un polymère thermoplastique et d'un élastomère.

## Patentansprüche

1. Kabelkasten (1), der einen Boden (10), eine Seitenwand (11) und einen Deckel (12) umfasst, wobei die Seitenwand (11) einen unteren Rand (110) und einen oberen Rand (112) aufweist, mit dem Boden (10) auf dem gesamten Umfang des letzteren durch ihren unteren Rand (110) verbunden ist und sich von ihrem unteren Rand (110) in Richtung ihres oberen Rands (112) erhebt, wobei sie sich von dem Boden (10) entfernt, der Deckel (12) gezielt auf den oberen Rand (112) der Wand (11) aufgelegt wird, um den Kasten (1) zu überragen, die Seitenwand (11) mindestens ein Fenster (2) und mindestens ein im Wesentlichen ebenes und abnehmbares Wandelement (3) umfasst, durch das mindestens ein Kabel verlaufen kann, und das abnehmbare Wandelement (3) in Betriebskonfiguration des Kastens in dem Fenster (2) sitzt, das es verschließt, um die Kontinuität der Seitenwand (11) sicherzustellen, **dadurch gekennzeichnet, dass** das abnehmbare Wandelement (3) einen ersten Rand (31) aufweist, der an einem entsprechenden ersten Rand (21) des Fensters (2) angelenkt ist, und dass das abnehmbare Wandelement (3) und das Fenster (2) in einem Abstand von ihren jeweiligen ersten Rändern (31, 21) komplementäre reversible Befestigungsmittel (41, 42) aufweisen, die zusammenwirken, um gezielt das Halten des abnehmbaren Wandelements (3) in dem Fenster (2) sicherzustellen.

2. Kabelkasten nach Anspruch 1, **dadurch gekennzeichnet, dass** das Fenster (2) auf dem oberen Rand (112) der Seitenwand (11) mündet.

3. Kabelkasten nach Anspruch 1 oder 2, **dadurch gekennzeichnet, dass** der erste Rand (31) des abnehmbaren Wandelements (3) im Wesentlichen parallel zu dem Boden (10) und näher zum Boden (10) als zum Deckel (12) ist.

4. Kabelkasten nach einem der vorhergehenden Ansprüche, **dadurch gekennzeichnet, dass** das Fenster (2) eine Innenkante (22) aufweist, die im Hintergrund in Richtung des Inneren des Kastens (1) angeordnet ist, und dass das abnehmbare Wandelement (3) gegen diese Kante (22) lehnt, um die Kontinuität der Außenseite (11e) der Seitenwand (11) sicherzustellen.

5. Kabelkasten nach einem der vorhergehenden Ansprüche, **dadurch gekennzeichnet, dass** die komplementären reversiblen Befestigungsmittel (41, 42) mindestens eine Öffnung (41) und einen radial zusammendrückbaren Stift (42) umfassen, der gezielt in diese Öffnung (41) eingreift.

6. Kabelkasten nach den Ansprüchen 3 bis 5, **dadurch gekennzeichnet, dass** die komplementären reversiblen Befestigungsmittel (41, 42) zwei Öffnungen (41), die in der Kante (22) in einem Abstand voneinander und dem Boden (10) hergestellt sind, und zwei entsprechende radial zusammendrückbare Stifte (42) umfassen, die von dem abnehmbaren Wandelement (3) getragen werden.

7. Kabelkasten nach einem der vorhergehenden Ansprüche, **dadurch gekennzeichnet, dass** der erste Rand (31) des abnehmbaren Wandelements (3) mittels eines Gelenks (5) an dem entsprechenden ersten Rand (21) des Fensters (2) angelenkt ist, wobei das Gelenk (5) sich im Wesentlichen aus einem Schlitz (51) und einer Zunge (52) zusammensetzt, die gezielt in diesen Schlitz (51) eingreift.

8. Kabelkasten nach Anspruch 7, **dadurch gekennzeichnet, dass** der Schlitz (51) in dem Boden (10) des Kastens hergestellt ist und dass die Zunge (52) auf dem ersten Rand (31) des abnehmbaren Wandelements (3) hervorsteht.

9. Kabelkasten nach einem der vorhergehenden Ansprüche, **dadurch gekennzeichnet, dass** das Wandelement (3) gegenüber seinem ersten Rand (31) einen zweiten Rand (32) aufweist, der durch Eingriff in den Deckel (12) arretiert wird.

10. Kabelkasten nach einem der vorhergehenden Ansprüche, **dadurch gekennzeichnet, dass** das Wandelement (3) durch Bimaterial-Einspritzung eines thermoplastischen Polymers und eines Elastomers hergestellt wird.

## Claims

1. Electrical box (1) comprising a bottom (10), a side wall (11), and a cover (12), the side wall (11) having a lower edge (110) and an upper edge (112), being connected to the bottom (10), over the whole periphery of the latter, via its lower edge (110), and rising from its lower edge (110) to its upper edge (112) away from the bottom (10), the cover (12) being selectively applied to the upper edge (112) of the wall (11) in order to cap the box (1), the side wall (11) comprising at least one window (2) and at least one substantially flat and removable wall element (3) capable of being traversed by at least one electrical cable, and the removable wall element (3) being, in the operational configuration of the box, housed in the window (2) which it closes off in order to provide the continuity of the side wall (11), **characterized in that** the removable wall element (3) has a first edge (31) articulated on a first corresponding edge (21) on the window (2) and **in that** the removable wall element (3) and the window (2) have, at a distance from their respective first edges (31, 21), the complementary means of reversible attachment (41, 42) interacting so as to selectively hold the removable wall element (3) in the window (2).

2. Electrical box according to Claim 1, **characterized in that** the window (2) opens onto the upper edge (112) of the side wall (11).

3. Electrical box according to Claim 1 or 2, **characterized in that** the first edge (31) of the removable wall element (3) is substantially parallel to the bottom (10) and closer to the bottom (10) than the cover (12).

4. Electrical box according to any one of the preceding claims, **characterized in that** the window (2) has an inner rim (22) set back towards the inside of the box (1), and **in that** the removable wall element (3) rests against this rim (22), ensuring the continuity of the outer face (11e) of the side wall (11).

5. Electrical box according to any one of the preceding claims, **characterized in that** the complementary means of reversible attachment (41, 42) comprise at least one orifice (41) and a radially compressible lug (42) selectively engaged in this orifice (41).

6. Electrical box according to Claims 3 to 5, **characterized in that** the complementary means of reversible attachment (41, 42) comprise two orifices (41) made in the rim (22) at a distance from one another and from the bottom (10), and two corresponding radially compressible lugs, supported by the removable wall element (3).

7. Electrical box according to any one of the preceding claims, **characterized in that** the first edge (31) of the removable wall element (3) is articulated on the corresponding first edge (21) of the window (2) by means of an articulation (5) essentially consisting of a slot (51) and a tab (52) selectively engaged in this slot (51).

8. Electrical box according to Claim 7, **characterized in that** the slot (51) is made in the bottom (10) of the box, and **in that** the tab (52) protrudes on the first edge (31) of the removable wall element (3).

9. Electrical box according to any one of the preceding claims, **characterized in that** the wall element (3) has, on the other side from its first edge (31), a second edge (32) immobilized by engagement in the cover (12).

10. Electrical box according to any one of the preceding claims, **characterized in that** the wall element (3) is made by a bimaterial injection of a thermoplastic polymer and of an elastomer.
